# EUROPEAN PATENT APPLICATION

(11) **EP 4 682 130 A1**
(43) Date of publication of application: **21.01.2026**
(21) Application number: 25190026.2
(22) Date of filing: 16.07.2025
(51) Int. Cl.: C04B 28/08, C04B 5/06

(54) **MINERAL COMPOSITE OBTAINED FROM STEELMAKING SLAG FOR APPLICATIONS IN THE CEMENT INDUSTRY AND RELATED PRODUCTION METHOD**

(30) Priority: 17.07.2024 IT 202400016516
(71) Applicant: Acciaieria Arvedi S.p.A., 20134 Milano (MI) (IT)
(72) Inventor: ARVEDI, Giovanni, 26100 Cremona CR (IT); MORANDI, Riccardo, 26100 Cremona CR (IT); MUSELLI, Roberto, 29010 San Pietro in Cerro PC (IT)
(74) Representative: Concone, Emanuele

(57) **Abstract**

A mineral composite for the cement industry has a particle size of ≤70µm and consists of a first component in a weight percentage of 70-100%, obtained from black steel slag from electric arc furnaces, and a second component, in a weight percentage of 0-30%, obtained from white steel slag from ladle furnaces. Such a mineral composite derived from recycled material can serve as an alternative binder to high-performance cement and also as an alternative cement component to clinker, thereby reducing the environmental impact of cement production.

## Description

The present invention relates to a mineral composite used in the cement industry to produce Portland cement (hereinafter simply "cement"), concrete, cement mortars, cement mixtures, etc., and in particular a composite obtained from steel slag from both the melting of ferrous scrap in electric arc furnaces (black slag) and secondary metallurgy (white slag), as well as the related production method.

The steel industry is constantly seeking methods to recover and recycle these slags, considering that their volumes amount to approximately 18.4 million tons/year at the European level, of which approximately 4.2 million tons/year are temporarily stored or landfilled, with a view to reducing the consumption of natural resources and minimizing waste production. In this regard, it is already known that this slag can be used as aggregate to partially or totally replace traditional natural products in various applications in the construction, railway, and road sectors.

From an environmental point of view, there are many advantages to be gained from the recovery and use of slag: minimization of waste production for disposal, reduction in the exploitation of natural resources and the use of activities that have an impact on the territory, such as quarries for the extraction of aggregates, energy savings, and reduction of CO₂ emissions.

An example of the use of black slag from basic oxygen furnace (BOF) steel production in the manufacture of cement mixtures is described in the paper *"*Preparation of high performance blended cements and reclamation of iron concentrate from basic oxygen furnace steel slag", in Resources, Conservation and Recycling (Elsevier), Vol. 56, No. 1, pp.48-55, 02.09.2011. Another example of the use of BOF slag in the cement industry is described in the paper *"*The mechanism of basic oxygen furnace steel slag retarding early-age hydration of Portland cement and mitigating approach towards higher utilization rate", in Journal of Cleaner Production (Elsevier), Vol.362, 132493, 05.06.2022.

In both cases, the use of BOF slag poses problems in its specific application to the cement sector: the first paper highlights the need to remove metals, iron in particular, as their presence is harmful (in fact, Portland cement standards are very restrictive on the presence of metals), and the second paper highlights the need to compensate for the presence of aluminum oxide (Al₂O₃) by adding gypsum to prevent abnormal behavior in the early stages of setting and hardening.

Another problem with the use of BOF slag for cement production concerns the phenomenon of its volumetric instability, caused mainly by the presence of calcium oxide (CaO) in free form, which expands when it reacts with water. In fact, BOF slag can reach a free CaO content of more than 12%, with an average content of about 5%, which is well above the maximum limit of 4% considered acceptable to avoid problems of volumetric instability.

The applicant already manufactures two commercial products made from black slag (INERTEX) and white slag (CALCETEK). Black slag is a by-product generated by the first melting of steel in the electric arc furnace (EAF), where it is separated from the liquid steel by specific weight and then poured into vats and spill fields for rapid cooling with water. White slag, on the other hand, comes from the steel refining stage in the ladle furnace (LF), where, when the necessary corrections are made with lime, aluminum, and other alloys, a lighter part is generated, which is then treated in exactly the same way as black slag.

Among the many applications of these two products are the production of cement and concrete. As is well known, concrete is an artificial conglomerate consisting of a mixture of binder, water, and fine and coarse aggregates (sand and gravel) with the addition, as needed, of additives and/or mineral additions that influence the physical or chemical characteristics, as well as the performance, of both fresh and hardened conglomerate.

The typical binder for concrete is cement, which is obtained by mixing gypsum and clinker, the latter being mainly derived from clay and limestone through a thermal process at approximately 1400°C in a rotary kiln with very high CO₂ production. The rock mainly used for the production of clinker is marl, as it is composed of a clay fraction and a carbonate fraction.

The clinker is then finely ground in ball mills with a percentage of gypsum and mineral additives such as calcium carbonate, natural or artificial pozzolans, silica fume, fly ash, and blast furnace slag, which can be present in percentages ranging from 20% to 35% by weight and, in the case of blast furnace slag, up to 95%. Obviously, the cement resulting from the joint grinding of clinker with secondary components generates cements with lower performance than those obtainable with clinker alone, depending on the pozzolanic activity of the additives themselves, i.e., their ability to bind with calcium hydroxide and generate hydrated silicates in the presence of water after 28 days of wet curing. Calcium carbonate, which has no pozzolanic activity, is useful for triggering the hardening phase, but does not contribute to the development of medium- to long-term strength. Pozzolans, on the other hand, slow down the initial development of strength, but are very effective in developing strength over long curing periods.

Currently, CALCETEK obtained from white slag is commonly used as a raw material for cement production, as a component of raw meal to be introduced into the rotary kiln, replacing part of the marl, while INERTEX obtained from black slag is currently used as an aggregate instead of natural gravel, with a grain size of up to 32 mm. However, there is still a need to reduce the amount of cement used in the production of concrete and other cement-containing products, because less cement use means economic savings, energy savings, and lower CO₂ emissions. Furthermore, it is desirable to reduce the environmental impact in the production of cement, which must still be used.

Compared to the BOF slag discussed above, the black slag from EAF used for INERTEX does not require metal removal as it contains virtually no metals. Volumetric instability is also not a problem, as the free CaO content does not exceed the 4% threshold, with an average value of less than 1%. Furthermore, despite having a higher aluminum oxide (Al₂O₃) content, surprisingly, no gypsum needs to be added to prevent abnormal behavior in the early stages of setting and hardening.

The purpose of this invention is therefore to provide a mineral composite for use in the cement industry both to reduce the environmental impact of cement production and to reduce the amount of cement used in bonded composites. This result is achieved with a mineral composite obtained from steel slag as described above, in particular made from INERTEX possibly mixed with CALCETEK up to a weight ratio of 70:30, said steel slag being ground in a ball mill to a size ≤70 µm and using air-cooled CALCETEK and not water-cooled CALCETEK.

A first fundamental advantage of this mineral composite is that it can replace traditional cement as a hydraulic binder in the typical applications mentioned above (concrete, cement mortars, etc.), with economic, energy, and environmental benefits due to the reduction in the amount of cement used.

A second significant advantage of this mineral composite derives from the possibility of using it as a mineral additive to clinker in cement production without causing a significant degradation of the initial and/or final performance of the cement, as is the case with the traditional mineral additives mentioned above, but rather with similar, if not better, performance than cement made from clinker alone. Consequently, with the same performance, cement obtained with the addition of this mineral composite in a fraction of up to 50% by weight requires much less clinker, with economic, energy, and environmental benefits.

In this regard, laboratory tests carried out using the standard mortar procedure, referring to the methodologies set out in UNI EN 206 §5.2.5.2 with reference to the verification of the functionality of other types of additives, carried out with a binder in which 52.5 cement is replaced by 10% to 35% by weight with INERTEX having a maximum particle size of 70 µm, showed an increase in the mechanical properties of concrete products, in particular compressive strength, tensile strength, and shear strength. It follows that, for the same strength, compared to traditional binders, the introduction of INERTEX and CALCETEK reduces the amount of cement in concrete and clinker in cement, with the economic and environmental advantages mentioned above.

These advantageous results derive from the particular composition of INERTEX (determined according to UNI EN 15309:2007) which, although variable, falls within the following ranges in percentages by weight, disregarding inevitable impurities that may be present up to 4%:
- iron oxide (FeO+Fe₂O₃+Fe₃O₄): 31-45%
- calcium oxide (CaO): 30-40%, of which no more than 4% free CaO
- silica oxide (SiO₂): 12-15%
- magnesium oxide (MgO): 6-10%
- aluminum oxide (Al₂O₃): 7-9%

The above composition varies depending on the type of steel produced (carbon, stainless, high-alloy), the type of scrap used, the characteristics of the fluxes, the amount of oxygen blown into the bath, and the furnace operation practices. In general, black slag can be likened to natural effusive rocks of volcanic origin.

The scientific explanation for INERTEX's performance is based on the fact that the typical Portland cement used as a binder is composed of four phases:
- Tricalcium aluminate, C3A: phase responsible for setting, but not for mechanical performance;
- Tetracalcium aluminate, C4AF: ferric phase responsible for color, but not for mechanical performance;
- Dicalcium silicate (belite), C2S: phase responsible for mechanical performance during long curing periods; and
- Tricalcium silicate (alite), C3S: phase responsible for mechanical performance during short curing periods.

Dicalcium silicate is the most valuable part of cement, and INERTEX's unique mineralogy is 35% dicalcium silicate. It also has remarkable hydraulicity, i.e., the ability to set and harden in a few hours, forming hydrated compounds that are no longer soluble, and significant and effective pozzolanic activity.

In addition to the aforementioned particle size ≤70µm obtained by ball milling, two other desirable characteristics of INERTEX for this application are:
- PSV between 53 and 55: smoothness value according to UNI EN 1097-8:2020;
- Los Angeles resistance <15: wear resistance according to UNI EN 1097-9:2008.

To further improve the performance of this alternative binder to cement, particularly its short-term strength, INERTEX is preferably mixed with CALCETEK, also with a particle size ≤70µm obtained by ball milling, with a weight ratio between the two products of up to 70:30.

Similar to INERTEX, the composition of CALCETEK (determined according to UNI EN 15309:2007) varies depending on the type of steel being produced, but although variable, it falls within the following ranges in weight percentages, disregarding inevitable impurities that may be present up to 4%:
- iron oxide (FeO+Fe₂O₃+Fe₃O₄): 1-2%
- calcium oxide (CaO): 40-60%
- silica oxide (SiO₂): 1-8%
- magnesium oxide (MgO): 5-10%
- aluminum oxide (Al₂O₃): 20-35%

The above oxide composition contains high quantities of aluminum oxide, which is responsible for the formation of calcium aluminate mineralogical phases, making CALCETEK particularly advantageous in cement production.

It should be noted that, as mentioned above, for this specific application it is necessary to modify the traditional CALCETEK production process, using progressive air cooling instead of the typical abrupt water cooling. This is necessary because the hydraulic phases of CALCETEK depend on the presence of CaO and C3A, which are among the main components of Portland cement, as indicated above. However, cooling with water inevitably causes the calcium oxide to start slaking and the hydraulic activity of the tricalcium aluminate to begin, resulting in a non-hydraulic version of CALCETEK. By avoiding the use of water, the oxides and aluminates remain active and become hydraulic upon hydration.

The production method for this mineral composite can therefore be summarized in the following steps:
a) recovery of black slag from the first melting of steel in an electric arc furnace;
b) rapid cooling of said black slag with water;
c) grinding of the cooled black slag in a ball mill to a particle size ≤70 µm;
d) recovery of white slag from the refining of steel in a ladle furnace;
e) gradual cooling of the white slag with air;
f) grinding of the cooled white slag in a ball mill to a particle size ≤70 µm;
g) mixing of the ground black slag with the ground white slag to a weight ratio of up to 70:30.

It should be noted that the above sequence of steps refers to the general case of using both INERTEX and CALCETEK, but if only INERTEX is used, the method is limited to steps a)-c) only. Furthermore, step c) is important because it promotes the mineralogical variation of the black slag, which allows for an increase in the presence of hematite, useful in the hydraulic phase, at the expense of magnetite, which is particularly inert. Similarly, step f) is important because it promotes an increase in the specific surface area of the white slag, the homogeneous mixing of the oxides and aluminates that separate after cooling, and avoids dangerous expansion phases in the finished elements as a result of secondary hydration.

Another possible variation of the above method involves replacing phases c) and f) with a single grinding phase following mixing, so that the sequence of phases would become:
a) recovery of black slag from the first melting of steel in the electric arc furnace;
b) rapid cooling of said black slag with water;
c) recovery of white slag from the refining of steel in a ladle furnace;
d) gradual cooling of said white slag with air;
e) mixing of black slag with white slag to a weight ratio of up to 70:30;
f) grinding of the slag mixture in a ball mill to a particle size ≤70 µm.

The advantageous results mentioned above vary depending on the specific proportion of the two components of the mineral composite according to the invention, as indicated in the following Table 1 comparing the values of the K coefficient measured with the standard mortar test, taking as a reference the methodologies set out in the UNI EN 196/1 standard, where the value of K is evaluated as contemplated in the UNI EN 206 standard in §5.2.5.2 with reference to the verification of the functionality of other types of additives. The K coefficient indicated in Table 1 is the coefficient of replacement of a quantity of cement with a quantity of alternative binder while maintaining the same final mechanical characteristics of the product containing the binder.

In other words, given that 1 is the value of type I cement used in the above standards, a coefficient K>1 indicates that the alternative binder replaces a quantity of cement greater than the quantity of alternative binder, and vice versa, K<1 indicates that more alternative binder is needed than the quantity of cement replaced. For example, K=1.35 means that 1 kg of alternative binder replaces 1.35 kg of cement, and K=0.7 means that 1 kg of alternative binder replaces 0.7 kg of cement.

More specifically, the cement used in this test is type I 52.5R cement, i.e., a cement made only with clinker that must achieve a compressive strength of at least 52.5 MPa after 30 days of curing. In reality, in structural concrete, this type of cement is only used in prefabrication, while with the use of blended cements characterized by poorer performance, the K values already decrease due to the additives present in the cement.

**Table 1: K coefficient values after 1, 7, and 28 days of curing, considering a 20% weight replacement of cement with 20% mineral composite**

| Sample | %INERTEX | %CALCETEK | 1 day | 7 days | 28 days |
|---|---|---|---|---|---|
| C1 | 100 | 0 | 0.60 | 1.11 | 1.35 |
| C2 | 90 | 10 | 0.66 | 0.71 | 0.71 |
| C3 | 80 | 20 | 0.67 | 0.78 | 0.76 |
| C4 | 70 | 30 | 0.69 | 0.91 | 1.09 |

Please note that if you wish to significantly increase the aluminum oxide (Al₂O₃) content in the composite compared to that already present in INERTEX, the presence of CALCETEK must be at least 5%.

Portland cements of types II, III, IV, V, and VI, which are obtained by grinding clinker with calcium carbonate, blast furnace slag, and pozzolans, as described above, have lower performance depending on the clinker reduction rate and any performance contribution obtainable from the use of mineral additives other than clinker. The table clearly shows that the combined use of type I 52.5 R cement and INERTEX+CALCETEK in varying proportions produces a cement with performance in line with pure cement in terms of both short-term and long-term strength.

## Claims

1. Mineral composite **characterized by** having a particle size ≤70µm and being made up of a first component and a second component, said first component being derived from black steelmaking slag from electric arc furnace and present in a weight percentage of 70-100%, and said second component being derived from white steelmaking slag from ladle furnace and present in a weight percentage of 0-30%, **and in that** said first component has the following composition in weight percentages, neglecting unavoidable impurities present up to 4%:
- ferrous oxides (FeO+Fe₂O₃+Fe₃O₄): 31-45%
- CaO: 30-40% of which not more than 4% of free CaO
- SiO₂: 12-15%
- MgO: 6-10%
- Al₂O₃: 7-9%
and said second component has the following composition in weight percentages, neglecting unavoidable impurities present up to 4%:
- ferrous oxides (FeO+Fe₂O₃+Fe₃O₄): 1-2%
- CaO: 40-60%
- SiO₂: 1-8%
- MgO: 5-10%
- Al₂O₃: 20-35%.

2. Binder for concrete, cemented mortars and the like **characterized in that** it includes the mineral composite according to claim 1 for 10-35% by weight.

3. Cement **characterized in that** it includes the mineral composite according to claim 1 for up to 50% by weight.

4. Method for the production of the mineral composite according to claim 1, **characterized by** including the following steps:
(a) recovery of black slag from the first melting of steel in the electric arc furnace;
(b) sudden cooling with water of said black slag;
(c) grinding in a ball mill of the cooled black slag to a particle size ≤70 µm;
(d) recovery of white slag from ladle furnace steel refining;
(e) progressive air cooling of said white slag;
(f) grinding in a ball mill of the cooled white slag to a particle size ≤70 µm;
(g) mixing of the black slag with the white slag at a ratio of up to 70:30 by weight; steps d)-g) being present only if the first component of the mineral composite is present in a weight percentage <100%.

5. Production method according to claim 4, **characterized in that** in the case where the first component of the mineral composite is present in a weight percentage <100%, steps c) and f) are replaced by a single grinding step following mixing of the unground slags in step g).
